## Europäisches Patentamt

## European Patent Office

## Office européen des brevets

(11) Veröffentlichungsnummer: **0 412 238 A1**

## (12) EUROPÄISCHE PATENTANMELDUNG

(21) Anmeldenummer: **90102693.0**

(22) Anmeldetag: **12.02.90**

(51) Int. Cl.⁵: **F16C 33/20**, C08L 27/18, C08L 23/02, C08K 3/34

(30) Priorität: **07.08.89 CS 4696/89**

(43) Veröffentlichungstag der Anmeldung: **13.02.91 Patentblatt 91/07**

(84) Benannte Vertragsstaaten: **AT CH DE ES FR GB IT LI**

(71) Anmelder: **Státni vyzkumny ustav materiálu Opletalova 25 Praha 1 (Nové mesto)(CS)**

(72) Erfinder: **Peterka, Milan, Dipl.-Ing. 4, Dédinova 1981 Praha(CS)**
Erfinder: **Novak, Miroslav, Dipl.-Ing. 3 Jagellonská 23 Praha(CS)**

(74) Vertreter: **Patentanwälte Beetz sen. - Beetz jun. Timpe - Siegfried - Schmitt-Fumian Steinsdorfstrasse 10 D-8000 München 22(DE)**

(54) Verbundwerkstoff für Gleitzwecke und Verfahren für seine Herstellung.

(57) Der erfindungsgemäße Verbundwerkstoff für Gleitzwecke besteht aus 30,0 bis 99,8 Gew.% gesinterten oder ausgehärteten hochmolekularen Polymeren, vorzugsweies PTFE und aus 0,2 bis 10,0 Gew.% mindestens eines oberflächenaktiven Wirkstoffes auf der Basis von Tonerdesilikaten, mit Vorteil Organomontmorillonit oder einem dehydrierten Tonerdesilikat. Faser- oder pulverförmige Füllstoffe in einer Menge von höchstens 70 Gew.% können im Verbundwerkstoff enthalten sein. Zur Herstellung des Werkstoffs wird das Organomontmorillonit gemahlen in organischen Lösungsmitteln zum Aufquellen gebracht. Die Polymere mit einer Korngröße von kolloidalen Dimensionen bis 1,0 mm können als Pulver oder in einer Suspension mit dem gequollenen schüttfähigen oder suspendierten Wirkstoff vermischt und z.B. als Beschichtung auf ein Tragelement aufgetragen oder zu Formteilen verarbeitet werden. Nach der Formgebung wird der Werkstoff ausgehärtet oder gesintert.

EP 0 412 238 A1

## VERBUNDWERKSTOFF FÜR GLEITZWECKE UND VERFAHREN FÜR SEINE HERSTELLUNG

Die Erfindung betrifft einen Verbundwerkstoff, insbesondere für Gleit- und Dichtungszwecke der im Oberbegriff des Patentanspruchs 1 angegebenen Gattung und ein Verfahren zur Herstellung eines Verbundwerkstoffs.

Als Gleitwerkstoffe sind Polytetrafluorethylen (PTFE) und super-hochmolekulares Polyethylen besonders geeignet, die wegen ihres niedrigen Reibungskoeffizienten gegenüber Metallen ohne flüssige oder halbfeste Schmiermittel ausreichend wirksam sind. Bei der Verwendung in mechanisch beanspruchten Teilen und für Gleitzwecke haben diese Werkstoffe aber verschiedene Nachteile. Es handelt sich vor allem um ungenügende mechanische Festigkeit mit der Tendenz zum Kriechen, um eine beträchtliche Wärmedehnung und um eine hohe Abnutzung (Verschleiß) bei anspruchsvolleren Gleitbedingungen. Zur Verbesserung der einen oder anderen dieser Eigenschaften werden in die Polymere pulverförmige oder faserige Füllstoffe zugemischt oder metallische versteifende Strukturen eingelagert. So wird gemäß der US-PS 3 376 082 Polytetrafluorethylen mit metallischen Pulvern auf der Basis von Blei, Zink, Kadmium, Indium, Kupfer oder deren Gemischen und Legierungen gefüllt. In der US-PS 3 342 667 sind als Füllstoffe pulverförmige Bronze, Kupfer, Blei, Graphit und Molybdendisulfid angegeben und in den GB-PS 2 136 063 und 2 166 142 werden als Füllstoffe Blei, Graphit, Bronze, Glaskügelchen und unlösliche Fluoride vorgeschlagen, die vor allem die Beständigkeit gegen Kavitationserscheinungen erhöhen sollen. Die EP-PS 234 602 empfiehlt das Füllen mit Zinksulfat und Bariumsulfat. Bekannt ist auch das Füllen mit pulverförmigem nichtrostendem Stahl, mit Elektrographit und mit Zinkoxid. Alle diese Füllstoffe besitzen einen verhältnismäßig kleinen versteifenden Effekt, aber sie verbessern die Eigenschaften von Polytetrafluorethylen in Bezug auf seine Beständigkeit gegen Abnutzung (Verschleiß) bei der Gleitbeanspruchung, auf seine Wärmeleitfähigkeit und Wärmeausdehnung.

Der versteifende Effekt wird gegenüber pulverförmigen Füllstoffen größer, wenn in das Polymermatrix Fasern eingelagert werden (vgl. DE-PS 2 001 101 und GB-PS2 136 063). Gemäß EP-PS 234 602 und DE-PS 2 104 605 werden Kohlenstoff fasern mit Fasern aus aromatischen Polysulfonen, Polyimiden, Polyesterimiden und deren Kombinationen als Armierungsstoff verwendet. Die Verwendung von pulverförmigem Polytetrafluorethylen mit möglichst kleinen Partikeln und von Polytetrafluorethylenfasern als Füllstoff für Thermoplaste und Duroplaste ist u.a. aus den DE-Psen 2 104 695, 2 000 632, 2 129 256, 3 038 248 und 2 415 327 bekannt und die Fasern vor allem aus Polyimiden, Polyphenylenoxid, Polysulfon, Epoxiden, Polyestern, Polyphenylensulfid, phenolischen Harzen, Nitrilkautschuk u.a. angeben. Versteifende Strukturen aus gesinterten Metallen, Metallgeweben oder Streckmetallen, die mit Polytetrafluorethylen imprägniert sind, beinhalten die GB-PS 1 596 279, die EP-PS 234 602 und die DE-PS 2 001 101.

Polytetrafluorethylen und auch super-hochmolekulares Polyethylen weisen eine relativ geringe Adhesion zu pulverförmigen ebenso wie zu faserförmigen versteifenden Füllstoffen auf, was durch unzureichende mechanische Haftkräfte zwischen diesen Werkstoff-Komponenten bedingt ist. Die Partikel dieser Füllstoffe haben gewöhnlich glatte Oberflächen, was für das mechanische Haftvermögen ungünstig ist. Die niedrige Zusammenhaltkraft zwischen dem Polymer und den Füllstoffen beschränkt die Anwendungsmöglichkeiten. Insbesondere bei größeren Anteilen an Füllstoffen sinkt das Gleitvermögen des Werkstoffs überproportional ab.

Aufgabe der Erfindung ist es, einen gattungsgemäßen Verbundwerkstoff zu schaffen, der bei hohem Gleitvermögen eine hohe Form- und Verschleißfestigkeit auch unter Langzeitbeanspruchungen besitzt.

Diese Erfindungsaufgabe wird durch die Merkmale des Patentanspruchs 1 gelöst.

Als aktiver Wirkstoff werden vorzugsweise Organomontmorillonit oder thermisch dehydriertes Tonerdesilikat mit PTFE oder einem ultrahochmolekularen Polyolefin als Polymer eingesetzt.

Vorteilhaft kann der Werkstoff einen versteifenden Füllstoff von höchstens 69,8 Gew.% enthalten, der aus Glas-und/oder Aramid- und/oder Polyamid- und/oder Kohlenstoff- und/oder Polysulfon- und/oder Polyesterimid- und/oder kurzen Metallfasern bestehen kann.

Ferner kann der Werkstoff mit Vorteil höchstens 69,2 Gew.% pulverförmigen Füllstoff, z.B. Eisen- und/oder Nichteisenmetalle und/oder Oxide und/oder Sulfide und/oder Graphit und/oder Elektrographit und/oder Molybdändisulfid und/oder Glas und/oder Keramik enthalten.

Gute Gleiteigenschaften ergeben sich bei Verwendung von Polytetrafluorethylen und ultrahochmolekularem Polyethylen in Verbindung mit relativ geringen Anteilen an oberflächenaktiven Wirkstoffen, wobei in überraschender Weise die mechanische Festigkeit und die Abriebbeständigkeit bereits bei geringen Wirkstoffanteilen von wenigen Gew.% gegenüber unbehandelten Gleitwerkstoffen stark verbessert sind. Dadurch wird die Lebensdauer wesentlich verlängert und die praktischen Anwendungen dieser Werkstoffe namentlich für selbstschmierende Lager erweitert. Die hier angesprochenen oberflächenaktiven Wirkstoffe sind solche Substanzen, deren Struktur und Eigenschaften schon bei kleinen Zugaben die mechanische Formbeständigkeit und die Lebensdauer von Formkörpern aus Polymeren und deren Gemischen mit pulverförmigen oder faserigen Füllstoffen unter mechanischen Beanspruchungen wesentlich vergrößern, was den möglichen Applikationsbereich erweitert. Die Struktur und die Eigenschaften des erfindungsgemäßen Wirkstoffes ergeben eine wesentliche Verstärkung der Bindung zwischen den einzelnen Werkstoffkomponenten. Zu diesem Zwecke werden die spezifischen Eigenschaften von geeigneten Tonerdesilikaten ausgenützt, und zwar insbesondere von Organomontmorillonit, das aus dem Montmorillonit durch die Einwirkung von organischen Verbindungen entsteht. Das Montmorillonit bildet dünne Blättchen in einer Größenordnung von $10^{-9}$ m und hat eine Dicke von etwa $10^{-10}$ m. Die spezifischen Eigenschaften insbesondere des Organomontmorillonits beruhen auf großen Änderungen ihrer Dimensionen durch Einwirkung von geeigneten organischen Flüssigkeiten, wobei sich ihr Volumen um mehr als zwei Größenordnungen vergrößert. Es wird angenommen, daß in die so entstandenen erweiterten Strukturen das in Form einer Suspension in organischen Lösungsmitteln oder in Pulverform vorliegende feinkörnige Polymer eindringen kann. Nach der Beseitigung der organischen Flüssigkeiten durch Trocknen findet eine umgekehrte Volumenänderung statt, bei welcher die aufgequollenen Partikel des Organomontmorillonits etwa auf ihre Normalgröße schrumpfen wollen. Dies führt zu einer festen mechanischen Verbindung und auch zu einer Absorptionsverknüpfung des Polymers oder seiner Gemische mit dem oberflächenaktiven Wirkstoff. Prüfungen haben erwiesen, daß der oberflächenaktive Wirkstoff nach dem Sintern oder Aushärten des Werkstoffs die Reversibilität der Volumenänderung verliert und sein Volumen unverändert bleibt, auch wenn der Werkstoff erneut der Einwirkung von organischen Reagenzien ausgesetzt wird. Durch Ausnutzung der extremen Änderungen der Raumstruktur des Organomontmorillonits wird eine wesentlich festere Bindung zwischen dem Polymer und dem aktiven Wirkstoff erzielt als bei üblichen Füllstoffen, was sich durch eine wesentlich verbesserte Beständigkeit gegen mechanische Beanspruchungen und gleichzeitig auch durch eine erhöhte Festigkeit bemerkbar macht.

Das Ergebnis dieses Prozesses ist eine feste mechanische Verbindung der Werkstoffkomponenten. Zu den großen Vorteilen dieser technischen Lösung gehört, daß eine starke Verfestigung von Polymeren oder ihrer gefüllten Gemische schon bei verhältnismäßig kleinen Zugaben von oberflächenaktiven Wirkstoffen entsteht, und zwar beginnend schon mit Zehnteln von Gewichtsprozent.

Eine Alternative zur Verbesserung der Strukturfestigkeit, Eigenschaften und Lebensdauer der oben angeführten Polymere und deren gefüllten Gemische sind Anteile von oberflächenaktiven Wirkstoffen auf der Basis von amorphen dehydrierten Tonerdesilikaten, die aufgrund ihrer durch Aufblähen erzielten hochporösen Oberflächenstruktur eine feste Haftung mit den Polymerpartikeln eingehen. Bei den blähfähigen Tonerdesilikaten läßt sich durch thermische Behandlung das Partikelvolumen um Größenordnungen vergrößern und eine expandierte poröse Partikelstruktur erreichen, die eine intensive Verankerung der Polymerpartikel bewirkt.

Zur Herstellung des erfindungsgemäßen Werkstoffs wird der oberflächenaktive Wirkstoff nach dem Zermahlen in organischen Lösungsmitteln oder durch Erhitzen zum Aufquellen oder Aufblähen gebracht und mechanisch mit pulverförmigen Polymeren vermischt, deren Partikelgröße von kolloidaler Größe bis zu 1,0 mm reichen. Danach wird das Gemisch getrocknet und z.B. durch Pressen, Walzen oder dergleichen verarbeitet oder mit einer Fluid-, Rotations- oder elektrostatischen Auftragungsmethode auf das gewünschte Werkstück aufgetragen. Anschließend wird der Verbundwerkstoff gesintert bzw. ausgehärtet.

Gemäß einem Herstellungsverfahren wird der oberflächenaktive Wirkstoff mit einer Polymersuspension in einem organischen Lösungsmittel vermischt und das Gemisch wird in Form eines Überzugs auf den zu behandelnden Teil aufgetragen oder nach dem Verdunsten des Lösungsmittels zu einem Produkt verarbeitet, das bei Temperaturen über dem Polymerschmelzpunkt gesintert wird. Der Werkstoff kann auch vor dem Sintern auf ein versteifendes Tragelement, wie ein Metallgewebe, Streckmetall oder eine poröse gesinterte Metallstruktur aufgepresst oder aufgewalzt werden. Bei Verwendung von Thermoplasten insbesondere von PTFE soll die Sintertemperatur über dem Erweichungs- bzw. Schmelzpunkt des Thermoplasten liegen. Bei der Verwendung von Duroplasten erfolgt die Aushärtung bei erhöhten Temperaturen und/oder durch Katalysatoren.

Bei einem anderen Herstellungsverfahren wird das pulverförmige thermisch aufgeblähte Tonerdesilikat in einem Fluidmischer mit pulverförmigem Polymer (Polytetrafluorethylen oder ultrahochmolekularem Polyethylen) zusammen mit den ggf. vorhandenen Füllstoffen zu einem weitgehend homogenen Gemisch gemischt. Eine weitere Möglichkeit ist das Suspendieren der pulverförmigen Wirkstoffe in einer organischen Flüssigkeit und das Einmischen von pulverförmigem Polymer in diese Suspension. Eine dritte Möglichkeit besteht in der Herstellung einer Wirkstoff-Wasser-Suspension und einer Polymerdispersion. Durch Mischen der Wirkstoff-Wasser-Suspension mit der Polymerdispersion erfolgt nach Zugabe von Koagulationsmitteln eine Koagulation der Polymerteilchen an den Wirkstoffpartikeln, was ein praktisch vollständig homogenes Gemisch ergibt. Bei der zweiten und dritten Vorgehensweise erfolgt eine Abscheidung der Feststoffpartikel von den jeweiligen Flüssigkeiten durch z.B. Sedimentation und Trocknung. Derart vorbereitetes trockenes Gemisch kann z.B. in Strangpressen oder Walzgerüsten zum gewünschten Halbfabrikat verpreßt werden. Wenn als Polymer Polytetrafluorethylen verwendet wird, erfolgt eine Sinterung der Formteile z.B. in einem Kammerofen bei Temperaturen von 360 bis 390 °C in Luft. Der Werkstoff kann auch in der Strangpresse gesintert werden. Wird ultrahochmolekulares Polyethylen als Polymer eingesetzt, wird der Werkstoff unter Druck im Werkzeug bei Temperaturen von 120 bis 220 °C behandelt. Bei der Erwärmung erweicht bzw. schmilzt das Polymer, die Partikel verbinden sich und gehen mit den Partikeln der konventionellen Füllstoffe und mit den Strukturen des oberflächenaktiven Wirkstoffes innige Verbindungen ein. Durch die erhöhten Temperaturen werden spätere Volumenänderungen der oberflächenaktiven Wirkstoffe unter Einwirkung von Lösungsmitteln vermieden. Der Effekt ist um so intensiver und schneller, je höher die Sinter- oder Erhärtungstemperatur ist.

Die nach diesen Verfahren hergestellten Werkstoffe haben verbesserte mechanische Eigenschaften und vor allem eine erhöhte Beständigkeit gegen Abnutzung (Verschleiß) im Vergleich mit herkömmlichen Polytetrafluorethylen-Werkstoffen. Die erfindungsgemäßen Werkstoffe aus z.B. Polytetrafluorethylen bzw. ultrahochmolekularem Polyethylen mit oberflächenaktivem Wirkstoff und ggf. Füllstoffen können zu Preßlingen verarbeitet oder zur Herstellung von Lagern oder anderen Gleitelementen auf metallisches Gewebe, poröse Strukturen aus gesinterten Metallen oder auf Substrate aus Streckmetall festhaftend aufgebracht werden. Bereits durch kleine Mengen von oberflächenaktiven Wirkstoffen wird die Beständigkeit der herkömmlich gefüllten Erzeugnisse oder Beschichtungen aus Polytetrafluorethylen gegenüber Abnutzung (Verschleiß) zwei- bis fünfmal größer, was eine entsprechende Verlängerung ihrer Lebensdauer bei Gleitbeanspruchung bedeutet.

Beispiel 1

Zur Herstellung eines Verbundwerkstoffs für Futter wurde Polytetrafluorethylen mit 25 Gew.% Glasmikrofasern und 3 Gew.% aufgequollenem Organomontmorillonit in einer Ethanolsuspension mechanisch durchgemischt. Das Gemisch wurde getrocknet und der so gewonnene Werkstoff wurde durch Pressen und Sintern verarbeitet.

Im einzelnen wurde das pulverförmige Organomontmorillonit in einer Kugelmühle auf eine Korngröße von 0,005 mm dispergiert. Danach wurde ein Gemisch von Perchlorethylen und Azeton im Verhältnis 1:1 zugegeben. Nach 30 Stunden Aufquellzeit wurde eine Vorratssuspension des aufgequollenen Organomontmorillonits vorbereitet, die 6 Gew. % Trockensubstanz enthielt. Eine abgewogene Menge dieser Suspension wurde nach Verdünnen mit 50 Vol.% Ethanol mit Polytetrafluorethylen vermischt, das mit 25 Gew.% Glasmikrofasern gefüllt war, wobei das erhaltene Gemisch 3 Gew.Teile von Organomontmorillonit auf 100 Gew.Teilen des gefüllten Polytetrafluorethylen enthielt. Die organischen Lösungsmittel wurden dann aus dem Gemisch durch Verdampfen bei Temperaturen von 100 bis 200 °C ausgetrieben. Das getrocknete Pulver wurde in einer Stahlform mit einem Druck von 50 MPa zu Platten von einer Dicke von 8 und 10 mm kaltgepreßt die dann in einem Kammerofen bei einer Temperatur von 380 °C gesintert wurden. Nach dem freien Abkühlen auf Zimmertemperatur entstanden so Halbfabrikate, aus denen Prüfkörper für Laborprüfungen der Gleiteigenschaften und Abnutzung (Verschleiß) gefertigt wurden.

Beispiel 2

Zur Herstellung eines Verbundwerkstoffs für Futter wurde Polytetrafluorethylen mit 25 Gew.% Elektrographit und mit 1,5 Gew. % aufgequollenem Organomontmorillonit in einer Ethanolsuspension in einem Mischer gemischt. Danach wurde das Gemisch durch Pressen und Sintern verarbeitet.

Im einzelnen wurde aus der Vorratssuspension des aufgequollenen Organomontmorillonits nach dem Beispiel 1 und aus dem mit 25 Gew.% Elektrographit gefüllten Polytetrafluorethylen durch Mischen in einem Mixer ein Gemisch hergestellt, das 1,5 Gew.-Teile der Trockensubstanz Organomontmorillonit auf 100 Gew.-Teile des gefüllten Polytetrafluorethylens enthielt. Nach der Beseitigung der Lösungsmittel bei 100 und 200 °C und nach einem Wiedervermahlen in einem Fluidmischer wurde ein Pulver gewonnen, aus dem Lagerfutter oder dergleichen hergestellt wurden.

Beispiel 3

Ein Verbundwerkstoff für Gleitzwecke aus einem Gemisch von ultrahochmolekularem Polyethylen mit 1,5 Gew.% aufgequollenem Organomontmorillonit wurde nach dem Mischen in einer Azetonsuspension durch Pressen verarbeitet.

Im einzelnen wurde eine abgewogene Menge der Vorratssuspension des aufgequollenen Organomontmorillonits nach dem Beispiel 1 mit einer Suspension des pulverförmigen ultrahochmolekularen Polyethylens (Molekulargewicht 4,5 • 10⁶, Fließindex < 0,1 g/10 min und Korngröße < 0,3 mm) in Azeton vermischt. Die Mengen der Suspensionen wurden so gewählt, daß die Trockensubstanz des Gemisches 100 Gew.-Teile hochmolekulares Polyethylen und 1,5 Gew.-Teile Organomontmorillonit enthielt. Das Gemisch wurde dann bis zum konstanten Gewicht bei 110°C getrocknet. Aus dem so gewonnenen Pulver wurden durch Kaltpressen in einem Stahlwerkzeug mit einem Druck von 10 MPa und 20 MPa, durch Sintern bei einer Temperatur von 200°C unter einem Druck von 10 MPa im Werkzeug und durch Abkühlen unter einem Druck von 20 MPa Platten mit einer Dicke von 8 und 10 mm hergestellt, die auf ihre Eigenschaften geprüft wurden. Diese Platten wiesen einen wesentlich geringeren Abrieb als die Proben aus reinem ultrahochmolekularem Polyethylen auf.

Beispiel 4

Ein Verbundwerkstoff für Futter aus Polytetrafluorethylen und 1,5 Gew.% Organomontmorillonit wurde durch Koagulation von Polytetrafluorethylen-Partikeln aus einer Suspension auf die Wirkstoffpartikel hergestellt. Der Verbundwerkstoff wurde durch Walzen zu einem selbstschmierenden Gleitfutter weiterverarbeitet.

In eine 60 %ige wässrige Dispersion von Polytetrafluorethylen wurden 1,5 Gew.% pulverförmiges, nicht aufgequollenes Organomontmorillonit (berechnet auf die Trockensubstanz des Polytetrafluorethylen) unter ständigem Rühren zugegeben und durch Zugabe von ca. 15 Vol.% Alkohol als Koagulationsmittel wurden die Polytetrafluorethylenteilchen auf den Organomontmorillonitpartikeln koaguliert. Nach dem Rühren wurde das erhaltene Gemisch sedimentiert und die klare Flüssigkeit dekantiert. Danach wurde das Sediment zweimal mit destilliertem Wasser gewaschen und wieder dekantiert. Das gewaschene Sediment wurde in einem Trockenschrank bei 100°C getrocknet. Die Überreste an flüchtigen Benetzungsmitteln und Stabilisatoren wurden dann bie 220°C ausgetrieben. Das gewonnene Pulver wurde in einem Fluidmischer homogenisiert. Durch Zusetzen von 16 Vol.% Benzin als Schmiermittel wurde eine Formmasse erhalten, die in die Struktur eines Metallgewebes eines Streckmetalls oder einer dünnen porösen Sinterschicht aus pulverförmiger Bronze eingewalzt werden konnte. Das Einwalzen des Gemisches wurde auf einer Doppelwalze durchgeführt. Nach dem Walzen wurde das enthaltene Benzin durch Verdunsten entfernt und die Werkstoffschicht wurde dann bei einer Temperatur von 370°C in einem Durchlaufofen gesintert. Die so hergestellten Halbfabrikate waren für die Fertigung von selbstschmierenden Gleitfuttern bestimmt.

Beispiel 5

Ein Verbundwerkstoff für Futter aus einem Gemisch von Polytetrafluorethylen, 25 Gew.% Glasmikrofasern, 5 Gew.% Graphit und 1,5 Gew.% Organomontmorillonit wurde durch Koagulieren von Polytetrafluorethylen aus der Dispersion auf die Wirkstoffteilchen hergestellt.

Dabei wurde das Verfahren nach Beispiel 4 wiederholt mit einer 60-prozentigen Polytetrafluorethylen-Dispersion, 1,5 Gew.% pulverförmigem Organomontmorillonit, 25 Gew.% Glasmikrofasern und 5 Gew.% Graphit, berechnet auf die Trokkensubstanz des Polytetrafluorethylens. Weil das Gemisch die Glasmikrofasern enthielt, wurde die Zugabe von Benzin für die Regelung der Viskosität beim Walzen auf 20 Gew.% erhöht. Die auf diese Weise hergestellten Halbfabrikate waren wieder zur Fertigung von selbst-schmierenden Gleitfuttern bestimmt.

Beispiel 6

Dieser Verbundwerkstoff bestand aus einem Gemisch von Polytetrafluorethylen, 25 Gew.% Glasmikrofasern und 1,5 Gew.% dehydriertem Tonerdesilikat. Das Gemisch wurde trocken in einem Fluidmischer vermischt.

Im einzelnen wurde eine Probe des fein zerriebenen Tonerdesilikates in einem elektrisch beheizten Ofen bei einer Temperatur von 1150°C geglüht. Durch das Glühen wurde das gebundene Wasser beseitigt, wodurch leichte, stark expandierte Partikel mit einer großen spezifischen Oberfläche entstanden, die eine sehr große Anzahl an feinen Hohlräumen enthielten. Auf diese Weise gewonnenes Pulver wurde dann in einer Menge von 1,5 Gew.-Teilen zu 100 Gew.-Teilen Polytetrafluorethylen zugegeben, das 25 Gew.% Glasmikrofasern enthielt. Das Gemisch wurde in einem Fluidmischer homogenisiert. Das Produkt wurde dann durch Pressen und Sintern zu Prüfmustern verarbeitet, deren Gleiteigenschaften bestimmt wurden.

Die Wirkung der oberflächenaktiven Wirkstoffe auf die Gleiteigenschaften und die Abnutzungs- bzw. Verschleißwerte des gefüllten Polytetrafluorethylens und des ultrahochmolekularen Polyethylens wurde in Prüfeinrichtungen (Tribometern) ermittelt. Die erhaltenen Ergebnisse wurden mit Werten von Prüfmustern verglichen, die aus den gleichen Grundwerkstoffen ohne aktive Wirkstoffe bestanden.

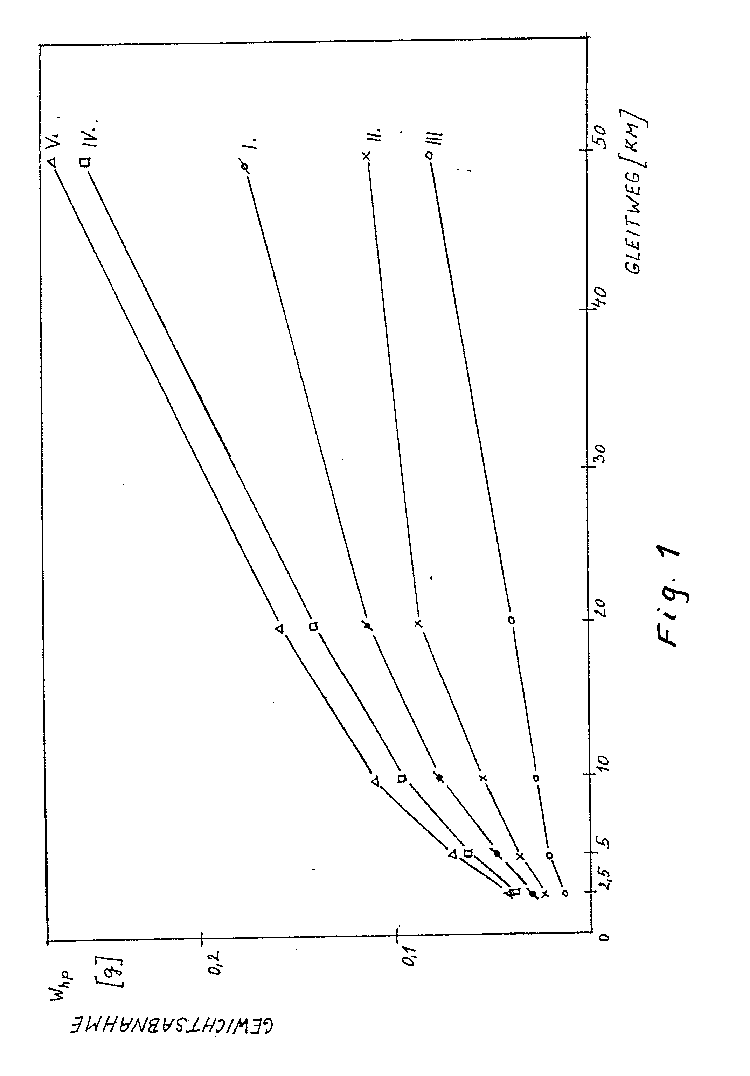

In dem Diagramm nach Fig. 1 sind die Untersuchungsergebnisse von drei erfindungsgemäßen Werkstoffen I, II, III sowie von zwei anderen Werkstoffen IV und V dargestellt. Die Werkstoffe hatten folgende Zusammensetzung:

I - Polytetrafluorethylen, gefüllt mit 25 Gew.% Glasmikrofasern, 3 Gew.% thermisch behandeltes Tonerdesilikat;

II - Polytetrafluorethylen, gefüllt mit 25 Gew.% Glasmikrofasern, 1,5 Gew.% aufgeqollenem Organomontmorillonit;

III - Polytetrafluorethylen, gefüllt mit 25 Gew.% Glasmikrofasern, 3 Gew.% aufgeqollenem Organomontmorillonit;

IV - Polytetrafluorethylen, gefüllt mit 25 Gew.% Glasmikrofasern, 3 Gew.% nicht aufgeqollenem Organomontmorillonit;

V - Polytetrafluorethylen, gefüllt mit 25 Gew.% Glasmikrofasern ohne aktiven Wirkstoff;

Aus dem Diagramm ist ersichtlich, daß der das nicht aufgeqollene Organomontmorillonit enthaltende Werkstoff IV praktisch keine verbesserten Abriebeigenschaften gegenüber dem herkömmlichen Werkstoff V besaß. Daraus wird die wesentliche Bedeutung der Umwandlung des Organomontmorillonit in einem oberflächenaktiven Wirkstoff durch Quellen und Schrumpfen deutlich. Vergleichbare Effekte ergaben sich auch bei Verwendung von Tonerdesilikaten, die vor ihrer Anwendung nicht thermisch dehydriert worden waren.

Aus den Untersuchungen ergaben sich folgende Erkenntnisse:

Die Reibungs- und Verschleißwerte werden außer durch die Werkstoff-Zusammensetzung auch von den Betriebsbedingungen und der Konstruktion beeinflußt, wobei die volumetrische Behandlung des Wirkstoffs (Aufquellen bzw. Aufblähen) offensichtlich eine wesentliche Rolle bei der Eigenschaftsverbesserung der Verbundwerkstoffe spielt.

Bei höheren Beanspruchungen (Druck oder Geschwindigkeit) kommt der günstige Einfluß des Organomontmorillonits bei dem mit Glasmikrofasern gefüllten Polytetrafluorethylen besonders deutlich zum Ausdruck. Wie aus Kurve II und III im Diagramm ersichtlich, ergab sich eine Verschleißminderung um das zwei- bis vierfache gegenüber dem herkömmlichen Werkstoff (Kurve V). In der Praxis bedeutet das eine entsprechend verlängerte Haltbarkeit bei Gleitelementen.

Die Wirkstoffe haben praktisch keinen Einfluß auf den Reibungskoeffizienten und auf den Abrieb des Gleitpartners. Bei geringen Beanspruchungen, d.h. kleinerem Andruck und geringerer Geschwindigkeit der Gleitpaarung ist der Einfluß von dehydriertem Tonerdesilikat größer. Die Untersuchungen zeigten, daß bereits Zugaben oberflächenaktiver Wirkstoffe in geringen Prozentsätzen die Gebrauchseigenschaften der gefüllten Polytetrafluorethylenmaterialien wesentlich verbessern.

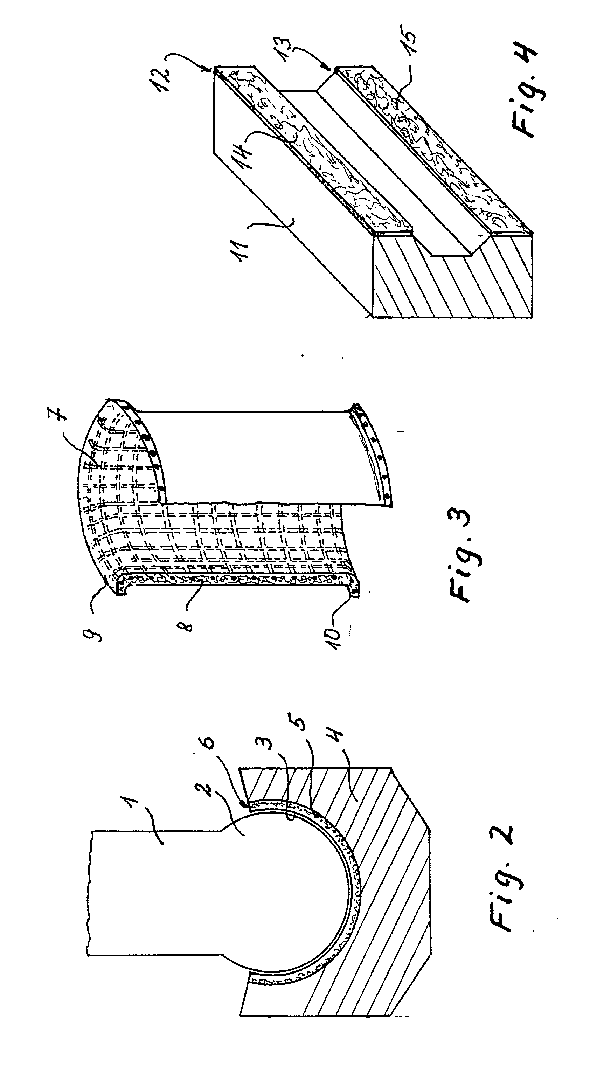

In den beiliegenden Figuren 2 bis 4 sind verschieden Anwendungsbeispiele für den erfindungsgemäßen Werkstoff dargestellt.

Die Figur 2 zeigt eine Kugelkopflagerung, bei welcher ein am Ende eines Zapfens 1 ausgebildeter Kugelkopf 2 in der kalottenförmigen Ausnehmung 3 eines Tragelements 4 gelagert ist. auf der Innenfläche der Ausnehmung 3 ist poröses Bronzepulver 5 aufgesintert, das als Verankerungsmittel für eine Gleiteinlage 6 aus dem erfindungsgemäßen Verbundwerkstoff dient.

In Figur 3 ist eine Scharnierbuchse in aufgeschnittener perspektivischer Ansicht dargestellt, wie sie beispielsweise in Scharnieren von Autotüren, Kofferraum- bzw. Motorhauben und dergleichen eingebaut wird. Diese Buchse besitzt eine gitterförmige Metall-Armierung 7, die vollständig oder zumindest einseitig in den erfindungsgemäßen Werkstoff 8 festhaftend eingebettet ist. Die Ränder 9, 10 der Buchse sind nach außen umgebogen.

Die Figur 4 zeigt eine pofilierte Führungsschiene, wie sie z.B. in Werkzeugmaschinen als Tisch- oder Konsolenführung eingesetzt wird. An der tragenden Vorderseite eines Tragkörpers 11 sind zwei Führungsflächen 12, 13 ausgebildet, auf denen jeweils ein Belag 14, 15 aus dem erfindungsgemäßen Verbundwerkstoff dauerhaft befestigt ist.

Oberflächenaktive Wirkstoffe auf der Basis geeigneter Silikate, insbesondere Organomontmorillonit, können auch zur Zubereitung von Kunststoff-Werkstoffen eingesetzt werden, die in Pulverform oder als Lösungen in organischen Lösungsmitteln verarbeitet werden. Zu diesen Kunststoffen gehören Polyethylen, Polyvinylchlorid, schmelzbare Fluoroplaste, Polyamid, Polyurethane, Epoxide, Phenoplaste und diverse Lackarten, Z.B. Akrylat-, Epoxid- und Polyesterlacke, die durch Fließbett-, Rotations- oder Elektrostatikverfahren auf eine Tragfläche aufgetragen werden.

**Ansprüche**

1. Verbundwerkstoff für insbesondere Gleit- und Dichtungszwecke auf der Basis von thermoplastischen oder duroplastischen organischen Polymeren bzw. deren Gemischen mit Füllstoffen, **gekennzeichnet** durch 30,0 bis 99,8 Gew.% eines Polymers und 0,2 bis 10,0 Gew.% eines oberflächenaktiven Wirkstoffs auf der Basis von z.B. Tonerde, der mit dem umgebenden Polymer feste Oberflächenverbindungen eingeht.

2. Verbundwerkstoff nach Anspruch 1, dadurch gekennzeichnet, daß

das Polymer ein Polytetrafluorethylen oder ein ultrahochmolekulares Polyolefin ist.

3. Verbundwerkstoff nach Anspruch 1 oder 2,
dadurch gekennzeichnet, daß
der oberflächenaktive Wirkstoff Organomontmorillonit enthält.

4. Verbundwerkstoff nach Anspruch 1 oder 2,
dadurch gekennzeichnet, daß
der oberflächenaktive Wirkstoff ein thermisch dehydriertes Tonerdesilikat enthält.

5. Verbundwerkstoff nach einem der Ansprüche 1 bis 4,
gekennzeichnet durch
höchstens 69,8 Gew.% eines faserförmigen Füllstoffes.

6. Verbundwerkstoff nach einem der Ansprüche 1 bis 5,
gekennzeichnet durch
höchstens 69,8 Gew.% eines pulverförmigen Füllstoffs.

7. Verfahren zur Herstellung eines Verbundwerkstoffs für insbesondere Dichtungs- und Gleitzwecke,
dadurch gekennzeichnet,
daß ein pulverförmiger Wirkstoff auf der Basis z.B. eines quellfähigen Tonerdesilikats mit organischen Lösungsmitteln vermischt und zur Volumenvergrößerung gebracht wird;
daß 0,2 bis 10 Gew.% dieses Wirkstoffs mit 30,0 bis 99,8 Gew.% eines thermoplastischen oder duroplastischen Polymers - Rest Füllstoffe - vermischt wird;
daß das Gemisch getrocknet und dabei die Wirkstoffpartikel verkleinert werden; und
daß das getrocknete Gemisch ggf. nach einer mechanischen Formgebung gesintert bzw. ausgehärtet wird.

8. Verfahren zur Herstellung eines Verbundwerkstoffs für insbesondere Gleit- und Dichtungszwecke,
dadurch gekennzeichnet,
daß ein pulverförmiger Wirkstoff auf der Basis eines thermisch blähfähigen Tonerdesilikats thermisch aufgebläht wird;
daß der aufgeblähte Wirkstoff in einer Menge von 0,2 bis 10 Gew.% mit einem thermoplastischen oder duroplastischen Polymer in einer Menge von 30,0 bis 99,8 Gew.% - Rest Füllstoffe - vermischt wird; und
daß das Gemisch ggf. nach einer mechanischen Formgebung gesintert bzw. ausgehärtet wird.

9. Verfahren nach Anspruch 7 oder 8,
dadurch gekennzeichnet, daß
pulverförmiges Polymer mit dem pulverförmigen Wirkstoff vermischt wird.

10. Verfahren nach Anspruch 7 oder 8,
dadurch gekennzeichnet, daß
der pulverförmige Wirkstoff mit dem in Lösung befindlichen Polymer in einem organischen Lösungsmittel vermischt wird.

11. Verfahren nach einem der Ansprüche 7 bis 10,
dadurch gekennzeichnet, daß
das Gemisch aus Wirkstoff und Polymer mechanisch auf ein Versteifungselement aufgebracht, ggf. getrocknet und anschließend gesintert oder bei Duroplasten ausgehärtet wird.

12. Verfahren nach einem der Ansprüche 7 bis 11,
dadurch gekennzeichnet, daß
als Polymer Polytetrafluorethylen oder ein ultrahochmolekulares Polyolefin verwendet wird.

13. Formkörper für Gleit- und Dichtungszwecke, wie Lagereinlagen, Gleitbeläge und dergleichen,
gekennzeichnet durch
einen Verbundwerkstoff nach einem der Ansprüche 1 bis 6.

14. Formkörper nach Anspruch 13,
dadurch gekennzeichnet, daß
der Verbundwerkstoff durch eine Armierung verfestigt ist.

Fig. 1

EP 0 412 238 A1

Fig. 2

Fig. 3

Fig. 4

EP 0 412 238 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 566 170 (THIOHOL) --- | | F 16 C 33/20 C 08 L 27/18 C 08 L 23/02 C 08 K 3/34 |
| A | US-A-3 409 584 (F.X. BUSCHMAN) --- | | |
| A | DE-A-1 544 750 (DIXON) ----- | | |

**RECHERCHIERTE SACHGEBIETE (Int. Cl.5)**

F 16 C
C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 02-09-1990 | LEROY ALAIN |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
    Dokument